# EUROPÄISCHE PATENTSCHRIFT

(11) **EP 2 349 525 B1**
(45) Veröffentlichungstag und Bekanntmachung des Hinweises auf die Patenterteilung: **20.08.2014**
(21) Anmeldenummer: 09760115.7
(22) Anmeldetag: 24.11.2009
(51) Int. Cl.: B01D 29/23, B01D 35/06

(54) **FILTERVORRICHTUNG**
FILTER DEVICE
DISPOSITIF DE FILTRATION

(30) Priorität: 26.11.2008 DE 102008059146
(43) Veröffentlichungstag der Anmeldung: 03.08.2011
(73) Patentinhaber: HYDAC FILTERTECHNIK GMBH, 66280 Sulzbach (DE)
(72) Erfinder: SAKRASCHINSKY, Michael, 66386 St. Ingbert (DE); SANN, Norbert, 66292 Riegelsberg (DE)
(74) Vertreter: Bartels, Martin Erich Arthur
(86) Internationale Anmeldenummer: PCT/EP2009/008351
(87) Internationale Veröffentlichungsnummer: WO 2010/060592

(56) Entgegenhaltungen:
- DE-A1- 3 446 772
- US-A- 4 428 834

## Beschreibung

Die Erfindung betrifft eine Filtervorrichtung mit einem in einer Umhüllung herausnehmbar aufnehmbaren Filterelement, das einen inneren Filterhohlraum festlegt und dessen vom abzureinigenden Fluid durchströmbares Filtermaterial einen beim Filtervorgang die Schmutzseite bildenden Raum von einem die Reinseite bildenden Raum trennt, und mit einem Bypassventil, dessen Schließkörper bei einer einen Grenzwertbereich übersteigenden Druckdifferenz der Räume gegen eine Schließfeder in eine den Abbau der Druckdifferenz ermöglichende Öffnungsstellung bewegbar ist, wobei der Schließkörper als Bestandteil des Filterelementes mit diesem zusammenhängend aus der Umhüllung herausnehmbar und dabei von der Schließfeder räumlich separierbar ist.

Filtervorrichtungen sind in den verschiedensten Bauformen im Handel frei erhältlich. Angesichts des sehr großen Umfanges, in dem derartige Filtervorrichtungen zum Einsatz kommen, namentlich zur Filtration von Arbeitsfluiden wie Hydraulikflüssigkeiten, Kraftstoffen, Schmierstoffen und dergleichen, sind hinsichtlich Bauweise und Betriebsverhalten mehrere Förderungen zu erfüllen. Angesichts der hohen Stückzahlen sind niedrige Herstellungskosten ein wesentlicher Gesichtspunkt, sowohl was die Herstellung der Filtervorrichtung als auch des darin auswechselbar aufnehmbaren Filterelementes anbelangt. Trotz der anzustrebenden einfachen Bauweise muss eine betriebssichere Funktion des Bypassventils gewährleistet sein, um einen schadenfreien Betrieb zu ermöglichen. Bei der hohen Stückzahl anfallender, verbrauchter Filterelemente, die aus der jeweiligen Umhüllung der Filtervorrichtung herausgenommen und durch neue Filterelemente ersetzt werden müssen, ist eine Bauweise anzustreben, die, ohne Abstriche an Betriebssicherheit hinnehmen zu müssen, geringe Herstellkosten der Filterelemente und damit einen kostengünstigen Betrieb der jeweiligen Filtervorrichtung ermöglicht.

Eine Filtervorrichtung der eingangs genannten Art ist beispielsweise aus US 4,428,834 A bekannt. Die bekannte Filtervorrichtung weist ein Filtergehäuse, einen Deckel, ein zwischen einer Normalstellung und einer Bypassstellung bewegbares, federvorgespanntes Filterelement und einen Dämpfer zur Dämpfung von Oszillationen des Filterelements auf. Der Dämpfer kann entweder ein einstückig im Filtergehäuse ausgebildetes Zwischenstück oder eine separate Hülse aufweisen, welche jeweils in einer vorgegebenen Distanz unterhalb des unteren Endes des Filterelements in dessen Normalstellung angeordnet sind.

Ein aus DE 34 46 772 A1 bekannter Filter für Flüssigkeiten weist ein Feinfilter- und ein Grobfilterelement auf. Bei einer Verstopfung des Feinfilterelements wird der Filterkörper entgegen der Wirkung einer Druckfeder angehoben und dadurch ein Bypass freigegeben, welcher den Durchfluss der zu filtrierenden Flüssigkeit durch das Grobfilterelement ermöglicht. In einer das Feinfilterelement von dem Grobfilterelement trennenden, quer zur Filterkörperachse verlaufenden Ebene ist ein Dichtring angeordnet, der im Normalbetrieb des Filters mit einem den Filterkörper umgebenden Gehäuseteil in dichtender Berührung steht. Bei einem durch die Verstopfung des Feinfilterelements bewirkten Druckanstieg ist der Dichtring von dem Gehäuseteil abhebbar.

Das die Betriebssicherheit beim Filtrationsvorgang gewährleistende Bypassventil ist derart gestaltet, dass der Schließkörper als Bestandteil des Filter-elementes mit diesem zusammenhängend aus der Umhüllung herausnehmbar und dabei von der Schließfeder des Ventils räumlich separierbar ist. Aufgrund dieser Entkoppelung der Schließfeder des Bypassventils vom Schließkörper und damit dem Filterelement wird bei jedwedem Wechsel jeweils nur eine Teilkomponente des Bypassventils mit dem Filterelement für die Entsorgung entnommen, während die Schließfeder geräteseitig verbleibt. Dies ermöglicht nicht nur die einfache und kostengünstige Bauweise des Filterelementes, sondern hat auch den Vorteil, dass das kritische Bauteil des Bypassventils, nämlich der Schließkörper, bei jedem Filterelementwechsel mit ersetzt wird.

Gegenüber den bekannten Filtervorrichtungen stellt sich die Erfindung die Aufgabe, eine einfache und kompakte Bauweise sowohl des Filterelements selbst als auch der gesamten Filtervorrichtung zu erreichen.

Diese Aufgabe wird gelöst durch eine Filtervorrichtung mit den Merkmalen von Patentanspruch 1 in seiner Gesamtheit. Erfindungsgemäß weist das eine Längsachse definierende Filterelement an einem Ende eine eine Einfassung für den zugeordneten Rand des Filtermaterials bildende Endkappe auf, an der das Bypassventil derart angeordnet ist, dass bei in der Schließstellung befindlichem Schließkörper der innere Filterhohlraum durch die Endkappe fluiddicht abgeschlossen und bei in der Öffnungsstellung befindlichem Schließkörper der Fluiddurchgang durch die Endkappe ermöglicht ist. Die bauliche Zuordnung der Komponenten des Bypassventiles, abgesehen von der Schließfeder, zu einer Endkappe des Filterelementes ermöglicht eine einfache und kompakte Bauweise sowohl des Filterelementes selbst als auch der Gesamtvorrichtung.

Dabei kann die Anordnung vorzugsweise so getroffen sein, dass der Schließkörper an der Endkappe in Richtung der Längsachse bewegbar angeordnet und gegen die Kraft der Schließfeder von einem an einem Durchlass der Endkappe befindlichen Ventilsitz abhebbar ist. Bei einem beim Filtervorgang vom inneren Filterhohlraum her nach außen hin durchströmbaren Filterelement kann der Ventilsitz durch den äußeren Öffnungsrand des in der Bodenfläche der Endkappe befindlichen Durchlasses gebildet sein, wobei die Schließfeder als Druckfeder den Schließkörper an die Außenseite des Bodens der Endkappe andrückt, der den unteren Abschluss des inneren Filterhohlraumes bildet. Der Schließkörper kann hierbei als mit dem Ventilsitz zusammenwirkende Schließfläche eine Platte aufweisen, an der sich von der Außenseite des Filterelementes her die als Druckfeder ausgebildete Schließfeder abstützt, die ihrerseits an einem Gehäuseboden der Umhüllung angebracht ist.

Bei besonders vorteilhaften Ausführungsbeispielen ist die Anordnung so getroffen, dass der Schließkörper einen von seiner mit dem Ventilsitz zusammenwirkenden Schließfläche durch den Durchlass der Endkappe hindurch axial in den inneren Filterhohlraum vorspringenden Schaft und die Endkappe einen in den Filterhohlraum ragenden Ansatz aufweisen, an dem der Schaft bei der Bewegung zwischen Schließstellung und Öffnungsstellung geführt ist. Diese Führung trägt zur Funktionssicherheit des Bypassventi les bei.

Die Zusammenwirkung des Schaftes des Schließkörpers mit einem in den Filterhohlraum ragenden Ansatz der Endkappe eröffnet die vorteilhafte Möglichkeit, den Schließkörper, ohne seine Funktionsbewegungen zwischen Schließstellung und Öffnungsstellung zu behindern, derart mit der Elementkappe zu verbinden, dass der Schließkörper beim Herausnehmen des Filterelementes aus der Umhüllung mitgenommen wird. Diesbezüglich kann die Anordnung so getroffen sein, dass der Schaft eine Bohrung des Ansatzes durchgreift und an seinem Ende einen Rastkörper bildet, der bei dem Herausnehmen des Filterelementes aus der Umhüllung den Schließkörper in Zusammenwirkung mit dem Rand der Bohrung des Ansatzes an diesem und damit am Filterelement sichert.

Bei vorteilhaften Ausführungsbeispielen ist die Umhüllung ein hohler Rotationskörper, aus dessen oberem Ende das Filterelement herausnehmbar ist und der als fluiddurchlässiges Stützrohr ausgebildet ist, das die Außenseite des Filtermaterials des Filterelementes umgibt, das beim Filtervorgang von dem die Schmutzseite bildenden inneren Filterhohlraum her nach außen hin durchströmbar ist.

Bei derartigen Ausführungsbeispielen ist das Stützrohr vorzugsweise aus Metall, insbesondere Stahl, gefertigt, so dass das Stützrohr für das darin herausnehmbar aufgenommene Filterelement ein eine Druckabstützung bildendes Gehäuseelement darstellt.

Bei derartigen Ausführungsbeispielen kann die mit dem Bypassventil versehene Endkappe dem unteren Ende des Stützrohres zugeordnet sein, wobei die Schließfeder am unteren Ende des Stützrohres derart angeordnet ist, dass der Schließkörper beim Herausnehmen des Filterelementes aus dem oberen Ende des Stützrohres von der im Stützrohr verbleibenden Schließfeder freikommt.

Bei Anordnung des Bypassventiles an derjenigen Endkappe, die den unteren Abschluss des inneren Filterhohlraumes bildet, kann beim Filtervorgang im Filterelement gebildete Verschmutzung im Filterelement nach unten sinken, wenn keine Durchströmung des Filterelementes vorliegt, beispielsweise bei Stillstand der Anlage. Um zu verhindern, dass sich eine größere Menge abgesunkener Verschmutzungen im Bereich des Durchlasses der Endkappe ansammelt, kann die Anordnung vorzugsweise so getroffen sein, dass der Ansatz der Endkappe eine die Bohrung für den Schaft des Schließkörpers enthaltende, den Bereich des Durchlasses überdeckende, einen Schmutzfänger bildende Schutzplatte bildet.

Bei besonders vorteilhaften Ausführungsbeispielen ist auf den Schaft des Schließkörpers eine Scheibe derart aufgesteckt, dass sie sich auf dem innerhalb des Ansatzes der Endkappe befindlichen Längenabschnitt des Schaftes in axialem Abstand von der mit dem Ventilsitz zusammenwirkenden Schließfläche des Schließkörpers befindet und beim Herausnehmen des Filterelementes und damit fehlender Kraft der Schließfeder und bei einer durch Schwerkraft erzeugten Verschiebebewegung des Schließkörpers am inneren Rand des Durchlasses anliegt und diesen verschließt. Dadurch ist erreicht, dass bei in der Öffnungsstellung befindlichem Schließkörper, wenn also beim Herausnehmen des Filterelementes keine Schließkraft der Schließfeder wirksam ist, die Öffnung des Durchlasses durch die auf den Schaft aufgesteckte Scheibe geschlossen ist, so dass Schmutz, der sich nicht auf der Schutzplatte angesammelt hat, nicht über den Durchlass austreten kann.

In einer ersten bevorzugten Ausgestaltung der erfindungsgemäßen Filtervorrichtung ist diese als Rücklauffilter ausgebildet mit von innen nach außen durchströmbarem Filterelement, wobei beim Filtervorgang der innere Filterhohlraum die Schmutzseite bildet. In einer zweiten bevorzugten Ausgestaltung der erfindungsgemäßen Filtervorrichtung ist diese als Druckfilter ausgebildet mit von außen nach innen durchströmbaren Filterelement, wobei beim Filtervorgang der innere Filterhohlraum die Reinseite bildet.

Bei einer Ausgestaltung der erfindungsgemäßen Filtervorrichtung als Druckfilter ist die Umhüllung vorteilhafterweise durch ein Filtergehäuse gebildet, welches einen das Filterelement umgebenden, beim Filtervorgang die Schmutzseite bildenden, äußeren Ringraum festlegt, wobei das Bypassventil der oberen Endkappe des Filterelements zugeordnet ist und die Schließfeder am abnehmbaren oberen Gehäusedeckel des Filtergehäuses derart angebracht ist, dass bei Herausnahme des Filterelements der Schließkörper von der am Gehäusedeckel verbleibenden Schließfeder separierbar ist. Dadurch, dass die Schließfeder, als in der Regel metallisches Element, geräteseitig verbleibt, eröffnet sich auch die weitere vorteilhafte Möglichkeit, das Filterelement als Ganzes veraschbar auszubilden, indem der Schließkörper wie der übrige, nach dem Herausnehmen zu entsorgende Teil des Filterelementes metallfrei aufgebaut ist. Dadurch kann das gesamte Filterelement, ohne dass besondere Handhabungs- oder Demontagemaßnahmen erforderlich wären, was bei der Natur der im verbrauchten Filterelement vorhandenen Rückstände, wie ölhaltige oder aggressive Schlämme, besondere Schutzmaßnahmen und großen Aufwand erfordern würde, als Ganzes thermisch auf einfache Weise durch Veraschen umweltfreundlich entsorgt werden.

Nachstehend ist die Erfindung anhand von in der Zeichnung dargestellten Ausführungsbeispielen im Einzelnen erläutert. Es zeigen:
- Fig. 1: einen Längsschnitt der Hauptbestandteile eines Ausführungsbeispieles der Filtervorrichtung, von der lediglich eine als äußeres Stützrohr dienende Umhüllung gezeigt ist, in der ein herausnehmbares Filterelement in seiner innerhalb der Umhüllung befindlichen Funktionsstellung dargestellt ist;
- Fig. 2: einen gegenüber Fig. 1 in größerem Maßstab gezeichneten Teilausschnitt des in Fig. 1 mit II bezeichneten Bezirks;
- Fig. 3: einen der Fig. 1 entsprechenden Längsschnitt, wobei jedoch das Filterelement nicht in seiner Funktionsstellung, sondern teilweise aus der Umhüllung herausgenommen dargestellt ist;
- Fig. 4: einen gegenüber Fig. 3 vergrößert gezeichneten Teilausschnitt des in Fig. 3 mit IV bezeichneten Bezirks;
- Fig. 5: eine gegenüber Fig. 2 und 4 geringfügig vergrößert gezeichnete perspektivische Schrägansicht lediglich einer Endkappe des Filterelementes des Ausführungsbeispieles mit zugeordnetem Bypassventil, das in der Schließstellung gezeigt ist;
- Fig. 6: eine der Fig. 5 entsprechende perspektivische Schrägansicht, wobei das Bypassventil in der Öffnungsstellung dargestellt ist;
- Fig. 7: eine perspektivische Schrägansicht der Umhüllung des Ausführungsbeispieles mit darin in der Funktionsstellung aufgenommenem Filterelement;
- Fig. 8: eine gegenüber Fig. 7 vergrößert gezeichnete Teildarstellung des in Fig. 7 mit VIII bezeichneten Bezirks;
- Fig. 9: einen Längsschnitt eines abgewandelten Ausführungsbeispieles der erfindungsgemäßen Vorrichtung in Form eines Druckfilters und
- Fig. 10: einen gegenüber Fig. 9 in größerem Maßstab gezeichneten Teilausschnitt des in Fig. 9 mit X bezeichneten Bezirks.

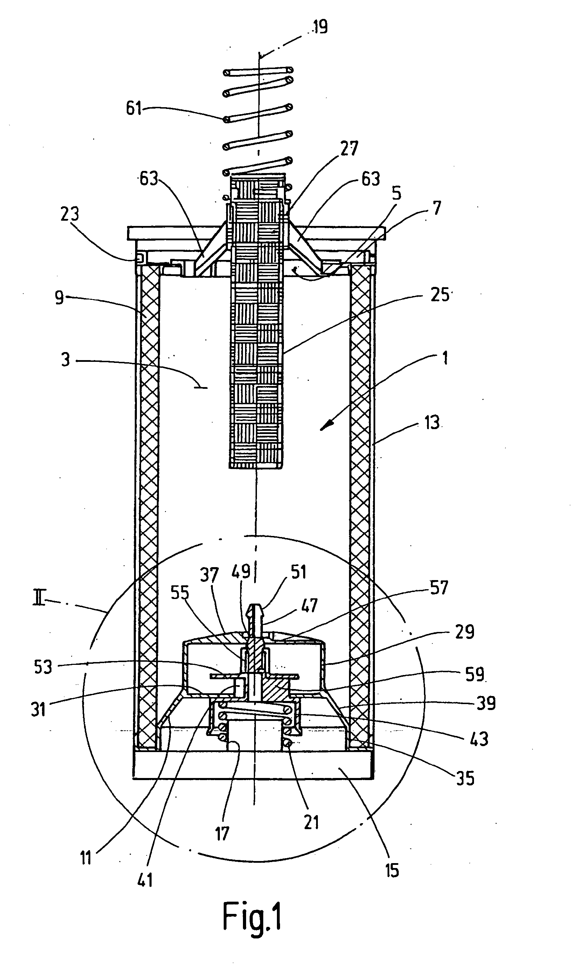

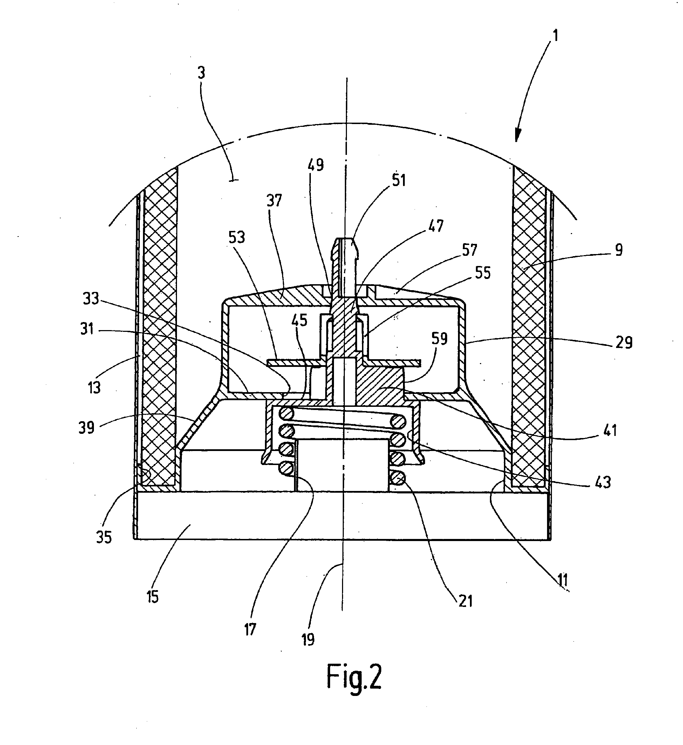

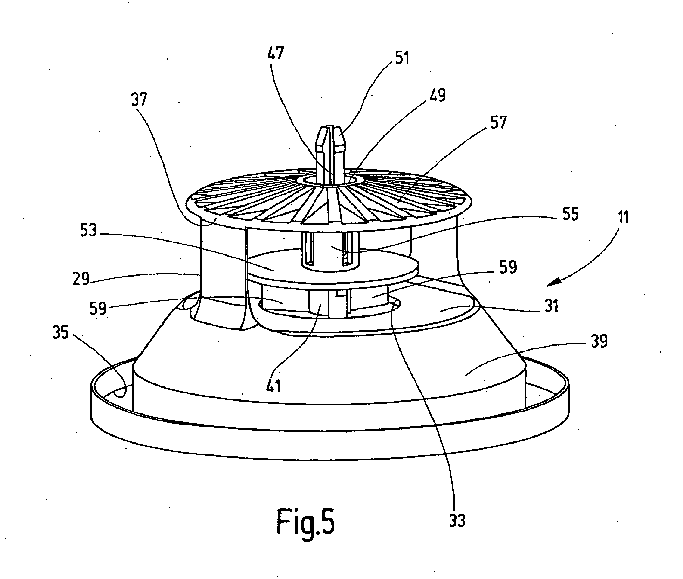

Anhand der Fig. 1 bis 8 ist die Erfindung am Beispiel eines Rücklauffilters erläutert, bei dem beim Filtervorgang ein betreffendes Filterelement 1 von innen nach außen durchströmt wird. Dem inneren Filterhohlraum 3 wird das abzureinigende Fluid über Fluiddurchgänge 5, die sich in einer oberen Endkappe 7 befinden, zugeführt, und zwar über Fluidführungen, die in üblicher Weise in einem oberen Gehäusedeckel (nicht dargestellt) eines nicht dargestellten Filtergehäuses ausgebildet sind, in dem die in Fig. 1 gezeigte Anordnung untergebracht ist. Von dem beim Filtervorgang die Schmutzseite bildenden inneren Filterhohlraum 3 her durchströmt im Betrieb das abzureinigende Fluid das den Filterhohlraum 3 umgebende Filtermaterial 9, das beim vorliegenden Ausführungsbeispiel metallfrei in Form eines Mattenaufbaus gestaltet ist. Das Filterelement 1 mit der aus Kunststoff pressgeformten oberen Endkappe 7, die die obere Einfassung des Filtermaterials 9 bildet, und mit der am unteren Ende befindlichen, ebenfalls den zugeordneten Rand des Filtermaterials 9 einfassenden unteren Endkappe 11, ist herausnehmbar in einer Umhüllung aufgenommen, bei der es sich beim gezeigten Ausführungsbeispiel um ein fluiddurchlässiges Stützrohr 13 aus Stahl handelt. Bei der in Fig. 1 und 2 gezeigten Funktionsstellung des Filterelementes 1 im Stützrohr 13 steht die untere Endkappe 11 an einem Bodenteil 15 des Stützrohres 13 an. Zur Längsachse 19 konzentrisch ist am Bodenteil 15 ein Dornkörper 17 angebracht, auf dem eine Schrauben-Druckfeder angebracht ist, die die Schließfeder 21 eines Bypassventils bildet. Die untere Endkappe 11 ist wie die obere Endkappe 7 aus Kunststoff einstückig pressgeformt.

Bei der in Fig. 1 und 2 gezeigten Funktionsstellung ist die obere Endkappe 7 mittels einer umfänglichen O-Ring-Abdichtung 23 an dem die Umhüllung bildenden Stützrohr 13 abgedichtet. Die obere Endkappe 7 bildet außerdem den Träger für einen in üblicher Weise aus Teilmagneten aufgebauten Magneteinsatz 25, der in einem Aluminium-Druckgussgehäuse 27 gehalten ist, das an der oberen Endkappe 7 abnehmbar gelagert ist. Nach dem Herausnehmen des Filterelementes 1 aus der durch das Stützrohr 13 gebildeten Umhüllung wird das Druckgussgehäuse 27 von der Endkappe 5 abgenommen und in Verbindung mit dem neu einzusetzenden Filterelement wiederverwendet.

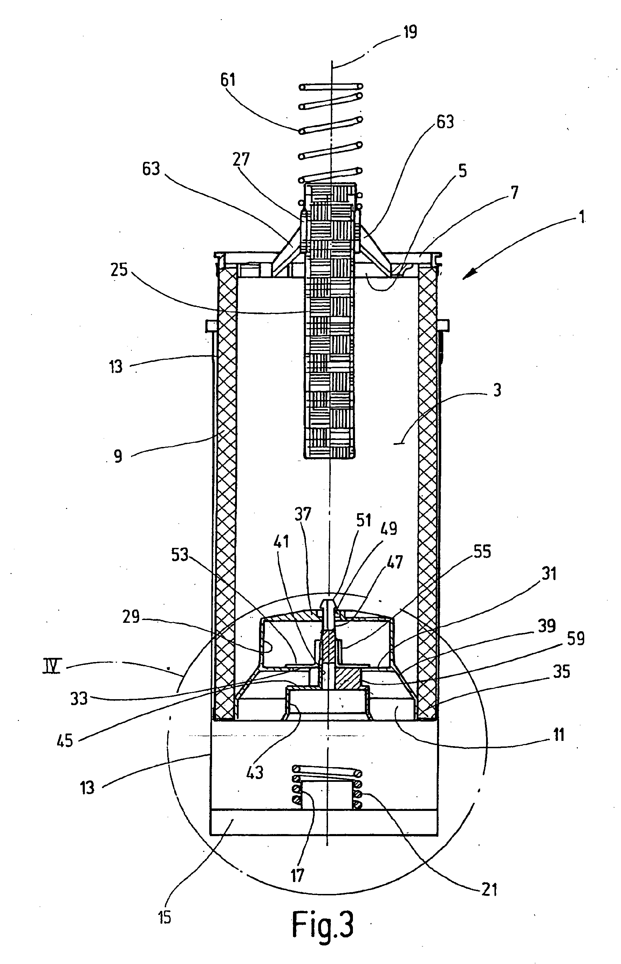

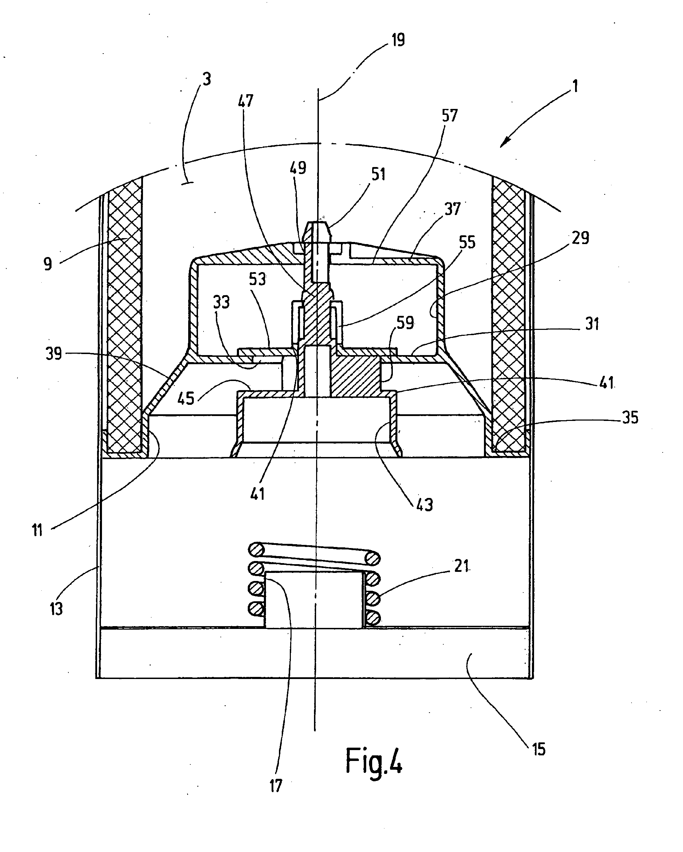

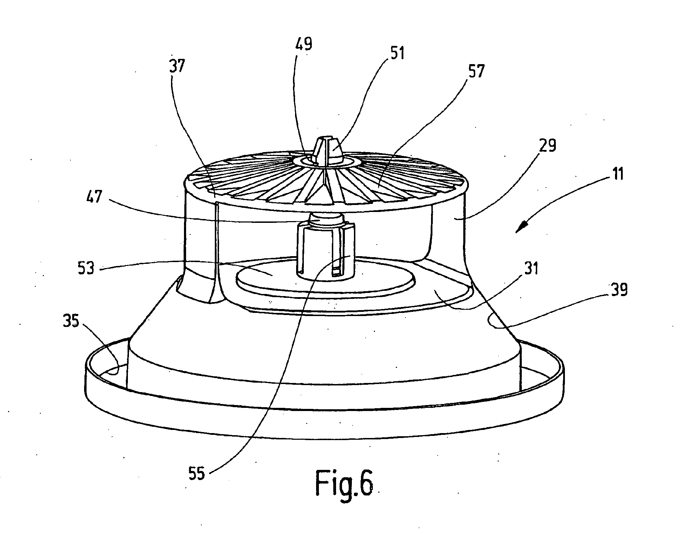

Bei der in Fig. 1 und 2 gezeigten Funktionsstellung des Filterelementes 1 wirkt die Kraft der gespannten Schließfeder 21 als Vorspannkraft, die das Bypassventil schließt. Wie am deutlichsten aus Fig. 2 zu ersehen ist, weist die Endkappe 11 einen zur Achse 19 konzentrischen, mit der Endkappe 11 aus Kunststoff einstückig ausgeformten Ansatz 29 auf, der sich axial ins Innere des Filterhohlraumes 3 erstreckt und, von der Schließfeder 21 abgesehen, die übrigen Komponenten des Bypassventiles enthält. Der Ansatz 29 bildet einen zentralen, ebenen, inneren Boden 31 mit einem zur Achse 19 konzentrischen, inneren Fluiddurchlass 33. Der Boden 31 befindet sich etwa auf halber Höhe zwischen der endseitigen Einfassung 35 für das Filtermaterial 9 und einer das obere Ende des Ansatzes 29 innerhalb des inneren Filterhohlraumes 3 bildenden oberen Schutzplatte 37. Zwischen der unteren Einfassung 35 und dem Boden 31 des Ansatzes 29 verläuft die Außenkontur des Ansatzes 29 mit einer Schrägfläche 39, die, wie unten erläutert als Schmutzfänger fungiert, und die obere Schutzplatte 37 erfüllt diesbezüglich eine ähnliche Funktion, wie ebenfalls später erläutert wird. Zwischen Boden 31 und Schutzplatte 37 ist ein Freiraum gebildet, in dem sich diejenigen Teile eines Schließkörpers 41 des Bypassventiles befinden, die den Durchlass 33 durchgreifen. Der Schließkörper 41 ist ein einstückiges, aus Kunststoff pressgeformtes Teil, dessen außerhalb des Durchlasses 33 befindliches Teil ein topfartiges Federhaus 43 bildet, in das sich die Schließfeder 21 erstreckt und sich am Topfboden des Federhauses 43 abstützt. Dadurch wird die kreisringförmige Schließfläche 45 des Schließkörpers 41 an den Öffnungsrand des Durchlasses 33, der als Ventilsitz fungiert, angedrückt. Von der Schließfläche 45 des Schließkörpers 41 erstreckt sich durch den Durchlass 33 hindurch ein Schaft 47, der eine zentrale Bohrung 49 in der Schutzplatte 37 durchgreift. Am freien Ende bildet der Schaft 47 einen Rastkörper 51, der durch die Bohrung 49 durchsteckbar ist, jedoch gegen ein Zurückziehen aus der Bohrung 49 eine Verrastung bildet. Beim Herausnehmen des Filterelementes 1 aus dem Stützrohr 13 wird daher durch Anlaufen des Rastkörpers 51 am Rand der Bohrung 49, wie dies in Fig. 6 gezeigt ist, der Schließkörper 41 mitgenommen. In Fig. 3 und 4 ist dieser Zustand dargestellt. Wie Fig. 3 und insbesondere Fig. 4 deutlich zeigen, kommt beim Herausnehmen des Filterelementes 1 aus dem Stützrohr 13 der Schließkörper 41 von der am Bodenteil 15 befindl ichen Schließfeder 21 frei, während der Schließkörper 41, der durch den Rastkörper 51 an der Bohrung 49 verrastet ist, mit dem Filterelement 1 herausgenommen wird.

Die Fig. 3 und 4 zeigen das Bypassventil in der Öffnungsstellung, bei der sich die Schließfläche 45 des Schließkörpers 41 im Abstand von dem Durchlass 33 befindet. Trotzdem ist der Durchlass 33 gegen einen Schmutzaustritt aus dem Filterhohlraum 3 heraus gesichert. Zu diesem Zweck ist auf den sich bei der Öffnungsstellung des Bypassventiles zwischen Boden 31 und Schutzplatte 37 des Ansatzes befindliche Abschnitt des Schaftes 47 eine ringscheibenartige Platte 53 aus Kunststoff aufgesteckt, die mit einer Klemmhülse 55 auf dem Schaft 47 festgelegt ist. Die Platte 53 liegt hierbei auf der Oberseite von Flügeln 59 auf, die sich vom Schaft 47 radial erstrecken und den Durchlass 33 durchgreifen. Bei unbelastetem Schließkörper 41 bewegt die Schwerkraft den Schließkörper 41 nach unten, so dass die Platte 53 den Rand des Durchlasses 33 überdeckt. Die Benutzung einer zusätzlichen Platte 53 ist nicht zwingend. Wenn auf die Platte 53 verzichtet wird, wird der Schließkörper 41 beim Herausnehmen des Filterelementes durch Zusammenwirkung des Rastkörpers 51 mit der Bohrung 49 mit herausgehoben.

Auf die zusätzliche Platte 53 kann insbesondere bei Einsätzen verzichtet werden, bei denen die Wirkung der Schutzplatte 37, obwohl sie sternförmige Unterbrechungen 57 für den Fluiddurchtritt aufweist, ausreichend schmutzabweisend wirkt. Zusätzlich bildet die seitliche Schrägfläche 39 am Ansatz 29 zusammen mit der benachbarten Innenwand des Filtermaterials 9 einen "Schmutzauffangkorb", der verhindert, dass beim Elementwechsel oder beim Öffnen des Bypassventils der im Filterelement 1 gesammelte Schmutz auf die Reinseite gelangt.

Bei in der Funktionsstellung innerhalb eines nicht gezeigten Filtergehäuses befindlichem Filterelement 1 (Fig. 1 und 2) ist die untere Endkappe 11 an dem als Elementaufnahme dienenden unteren Bodenteil 15 des Stützrohres 13 mittels einer Druckfeder 61 in Anlage gehalten, die sich einerseits am Magnetgehäuse 27 des Magneteinsatzes 25 und andererseits an dem nicht dargestellten Gehäusedeckel des ebenfalls nicht dargestellten Filtergehäuses abstützt. Dabei ist die beim Funktionszustand wirksame Federkraft der Druckfeder 61 größer als die Kraftwirkung der Schließfeder 21 des Bypassventils. Um zu vermeiden, dass bei abgenommenem Gehäusedeckel (nicht dargestellt) und dadurch entspannter Druckfeder 61 das Filterelement 1 aus dem Stützrohr 13 durch die Wirkung der Schließfeder 21 herausgedrückt wird, ist die Vorspannung am O-Ring 23 so gewählt, dass die Schließfeder 21 das Filterelement 1 nicht aus dem Stützrohr 13 herausdrückt.

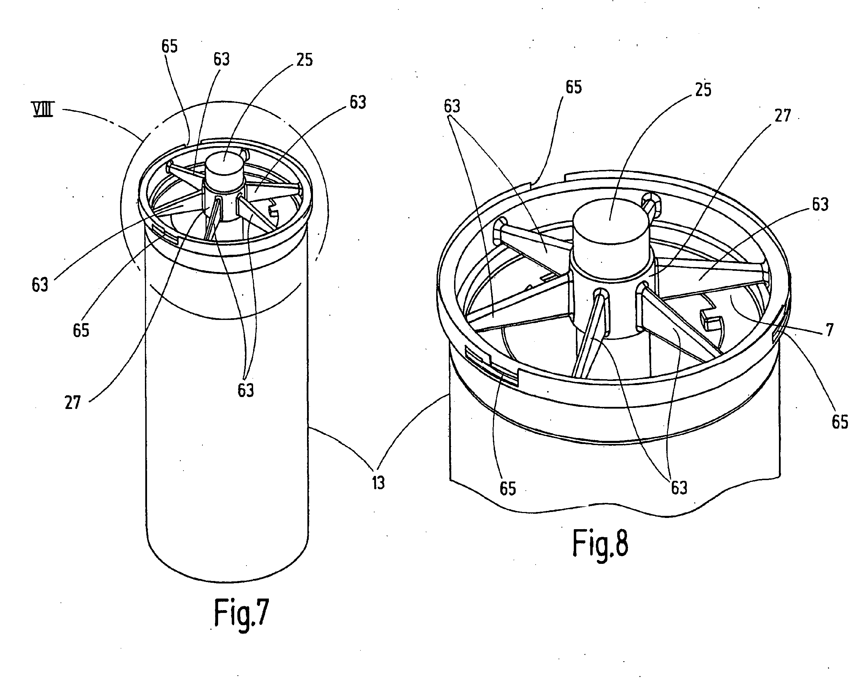

In Fig. 7 und 8 ist eine zusätzliche Möglichkeit der Sicherung des Filterelementes 1 gegen Herausdrücken durch die Schließfeder 21 gezeigt. Wie insbesondere aus Fig. 8 ersichtlich, weist das Magnetgehäuse 27 sternförmige, radial verlaufende Arme 63 auf, die außenseitig einen Bund aufweisen, der in Zusammenwirkung mit Bajonettführungen 65 am Stützrohr 13 einen Bajonettverschluss bildet. Beim Auswechseln eines Filterelementes 1 wird dadurch bei Lösen der Bajonettverriegelung das Filterelement frei, um aus dem Stützrohr 13 wieder herausgenommen zu werden, in dem die Schließfeder 21 des Bypassventiles verbleibt. Nach Lösen der Bajonettverriegelung steht das Magnetgehäuse 27 zur Weiterverwendung bei einem neu einzusetzenden Filterelement 1 zur Verfügung.

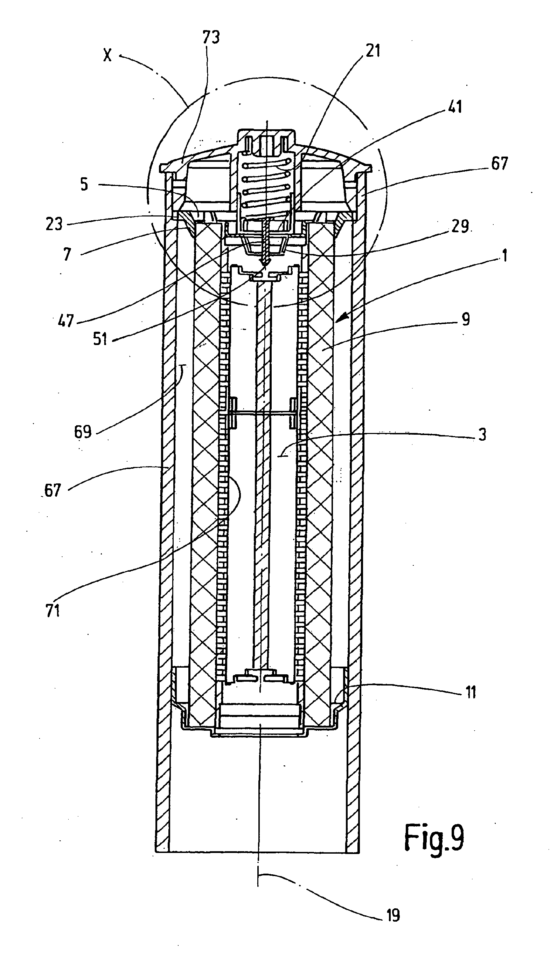

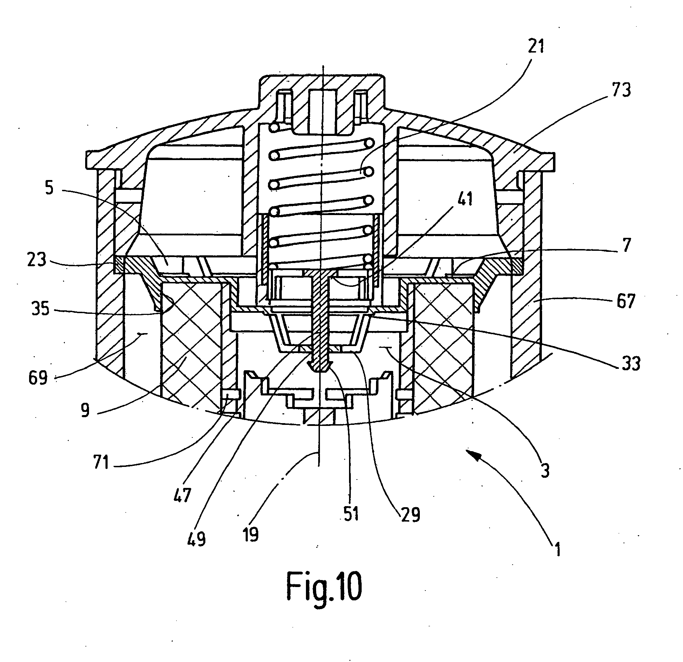

Fig. 9 und 10 verdeutlichen ein zweites Ausführungsbeispiel in Form eines Druckfilters, bei dem das Filterelement 1 in einem Filtergehäuse 67 herausnehmbar so angeordnet ist, dass das Filtermaterial 9 beim Filtervorgang von außen her zum inneren Filterhohlraum 3 hin durchströmt wird. Dementsprechend bildet der äußere Ringraum 69 an der Außenseite des Filtermaterials 9 die Schmutzseite, während der innere Filterhohlraum 3 die Reinseite bildet, wobei das Filtermaterial 9 ein inneres Stützrohr 71 umgibt, das in üblicher Weise aus Kunststoff geformt ist-und den inneren Filterhohlraum 3 umfänglich begrenzt.

Für den Druckabbau bei einer den Grenzwertbereich übersteigenden Druckdifferenz zwischen äußerem Ringraum 69 und innerem Filterhohlraum 3 ist ein Bypassventil der oberen Endkappe 7 des Filterelementes 1 zugeordnet, wobei wiederum der Schließkörper 41 als einstückiges Kunststoffteil der Endkappe 7 zugeordnet und an dieser bewegbar gesichert ist, während die Schließfeder 21 am abnehmbaren Gehäusedeckel 73 des Filtergehäuses 67 angebracht ist, so dass beim Filterelementwechsel wiederum der Schließkörper 41 von der am Gehäusedeckel 73 verbleibenden Schließfeder 21 separiert wird. Wiederum, wie beim ersten Ausführungsbeispiel, weist der Schließkörper 41 einen Schaft 47 mit endseitigem Rastkörper 51 auf, der eine Sicherung des Schließkörpers 41 an einem Ansatz 29 der Endkappe 7 bildet, der sich, wie beim ersten Ausführungsbeispiel, axial in den inneren Filterhohlraum 3 erstreckt. Wie bei dem ersten Ausführungsbeispiel kann somit das Filterelement 1 zur Gänze aus veraschbaren Werkstoffen gebildet sein, nämlich mit jeweils aus Kunststoff bestehendem Schließkörper 41, Endkappen 7 und 11 aus Kunststoff, dem aus Kunststoff gebildeten Stützrohr 71 sowie dem Filtermaterial 9 aus einem metallfreien Mattenaufbau.

## Patentansprüche

1. Filtervorrichtung mit
- einem in einer Umhüllung (13, 67) herausnehmbar aufnehmbaren Filterelement (1), das einen inneren Filterhohlraum (3) festlegt und dessen vom abzureinigenden Fluid durchströmbares Filtermaterial (9) einen beim Filtervorgang die Schmutzseite bildenden Raum (3, 6) von einem die Reinseite bildenden Raum trennt, und
- einem Bypassventil, dessen Schließkörper (41) bei einer einen Grenzwertbereich übersteigenden Druckdifferenz der Räume gegen eine Schließfeder (21) in eine den Abbau der Druckdifferenz ermöglichende Öffnungsstellung bewegbar ist,
- wobei der Schließkörper (41) als Bestandteil des Filterelementes (1) mit diesem zusammenhängend aus der Umhüllung (13, 67) herausnehmbar und dabei von der Schließfeder (21) räumlich separierbar ist,
- **dadurch gekennzeichnet, dass** das eine Längsachse (19) definierende Filterelement (1) an einem Ende eine eine Einfassung (35) für den zugeordneten Rand des Filtermaterials (9) bildende Endkappe (11, 7) aufweist, an der das Bypassventil derart angeordnet ist, dass bei in der Schließstellung befindlichem Schließkörper (41) der innere Filterhohlraum (3) durch die Endkappe (11, 7) fluiddicht abgeschlossen und bei in der Öffnungsstellung befindlichem Schließkörper (41) der Fluiddurchgang durch die Endkappe (11, 7) ermöglicht ist.

2. Filtervorrichtung nach Anspruch 1, **dadurch gekennzeichnet, dass** der Schließkörper (41) an der Endkappe (11, 7) in Richtung der Längsachse (19) bewegbar angeordnet und gegen die Kraft der Schließfeder (21) von einem an einem Durchlass (33) der Endkappe (11, 7) befindlichen Ventilsitz abhebbar ist.

3. Filtervorrichtung nach Anspruch 2, **dadurch gekennzeichnet, dass** der Schließkörper (41) einen von seiner mit dem Ventilsitz zusammenwirkenden Schließfläche (45) durch den Durchlass (33) der Endkappe (11, 7) axial in den inneren Filterhohlraum (3) vorspringenden Schaft (47) und die Endkappe (11, 7) einen in den Filterhohlraum (3) ragenden Ansatz (29) aufweisen, an dem der Schaft (47) bei der Bewegung zwischen Schließstellung und Öffnungsstellung geführt ist.

4. Filtervorrichtung nach Anspruch 3, **dadurch gekennzeichnet, dass** der Schaft (47) eine Bohrung (49) des Ansatzes (29) durchgreift und an seinem Ende einen Rastkörper (51) bildet, der bei dem Herausnehmen des Filterelementes (1) aus der Umhüllung (13, 67) den Schließkörper (41) am Rand der Bohrung (49) am Ansatz (29) der Endkappe (11, 7) sichert.

5. Filtervorrichtung nach einem der vorhergehenden Ansprüche, **dadurch gekennzeichnet, dass** die Umhüllung ein hohler Rotationskörper ist, aus dessen oberem Ende das Filterelement (1) herausnehmbar ist und der als fluidduchlässiges Stützrohr (13) ausgebildet ist, das die Außenseite des Filtermaterials (9) des Filterelementes (1) umgibt.

6. Filtervorrichtung nach Anspruch 5, **dadurch gekennzeichnet, dass** das Stützrohr (13) aus Metall, insbesondere Stahl, gefertigt ist.

7. Filtervorrichtung nach Anspruch 5 oder 6, **dadurch gekennzeichnet, dass** die mit dem Bypassventil versehene Endkappe (11) dem unteren Ende des Stützrohres (13) zugeordnet ist, und dass die Schließfeder (21) am unteren Ende des Stützrohres (13) derart angeordnet ist, dass der Schließkörper (41) beim Herausnehmen des Filterelementes (1) aus dem oberen Ende des Stützrohres (13) von der im Stützrohr (13) verbleibenden Schließfeder (21) freikommt.

8. Filtervorrichtung nach einem der Ansprüche 4 bis 7, **dadurch gekennzeichnet, dass** der Ansatz (29) der Endkappe (11) eine die Bohrung (49) für den Schaft (47) des Schließkörpers (41) enthaltende, den Bereich des Durchlasses (33) überdeckende, einen Schmutzfänger bildende Schutzplatte (37) aufweist.

9. Filtervorrichtung nach einem der Ansprüche 3 bis 8, **dadurch gekennzeichnet, dass** auf den Schaft (47) des Schließkörpers (41) eine Scheibe (53) derart aufgesteckt ist, dass sie sich auf dem innerhalb des Ansatzes (29) der Endkappe (11) befindlichen Längenabschnitt des Schaftes (47) in axialem Abstand von der mit dem Ventilsitz zusammenwirkenden Schließfläche des Schließkörpers befindet und beim Herausnehmen des Filterelementes (1) und damit fehlender Kraft der Schließfeder (21) und bei einer durch Schwerkraft erzeugten Verschiebebewegung des Schließkörpers (41) am inneren Rand des Durchlasses (33) anliegt und diesen verschließt.

10. Filtervorrichtung nach einem der vorhergehenden Ansprüche, **dadurch gekennzeichnet, dass** die Filtervorrichtung als Rücklauffilter ausgebildet ist mit von innen nach außen durchströmbarem Filterelement (1), wobei beim Filtervorgang der innere Filterhohlraum (3) die Schmutzseite bildet.

11. Filtervorrichtung nach einem der Ansprüche 1 bis 9, **dadurch gekennzeichnet, dass** die Filtervorrichtung als Druckfilter ausgebildet ist mit von außen nach innen durchströmbarem Filterelement (1), wobei beim Filtervorgang der innere Filterhohlraum (3) die Reinseite bildet.

12. Filtervorrichtung nach Anspruch 11, **dadurch gekennzeichnet, dass** die Umhüllung durch ein Filtergehäuse (67) gebildet ist, welches einen das Filterelement (11) umgebenden, beim Filtervorgang die Schmutzseite bildenden, äußeren Ringraum (69) festlegt, dass das Bypassventil der oberen Endkappe (7) des Filterelements (1) zugeordnet ist und die Schließfeder (21) am abnehmbaren oberen Gehäusedeckel (73) des Filtergehäuses (67) derart angebracht ist, dass bei Herausnahme des Filterelementes (1) der Schließkörper (41) von der am Gehäusedeckel (73) verbleibenden Schließfeder (21) separierbar ist.

13. Filtervorrichtung nach einem der vorhergehenden Ansprüche,
**dadurch gekennzeichnet, dass** der Schließkörper (41) wie der übrige, nach dem Herausnehmen zu entsorgende Teil des Filterelementes (1) metallfrei aufgebaut und veraschbar ist.

## Claims

1. A filter device comprising
- a filter element (1) which can be held removeably in a sheathing (13, 67), that defines an inner filter cavity (3) and the filter material (9) of which, through which the fluid to be cleaned can flow, separates a space (3, 6) forming the dirty side during the filtering process from a space forming the clean side, and
- a bypass valve, the closing body (41) of which can be moved against a closing spring (21) into an open position which enables a reduction of the pressure difference at a pressure difference of the spaces which exceeds a boundary value range,
- the closing body (41), as a component of the filter element (1) and coherent with the latter, being able to be removed from the sheathing (13, 67) and thereby being able to be separated spatially from the closing spring (21),
- **characterised in that** the filter element (1) defining a longitudinal axis (19) has on one end an end cap (11, 7) which forms an enclosure (35) for the assigned edge of the filter material (9) and on which the bypass valve is arranged such that when the closing body (41) is in the closed position, the inner filter cavity (3) is closed fluid tight by the end cap (11, 7) and when the closing body (41) is in the open position, the passage of fluid through the end cap (11, 7) is made possible.

2. The filter device according to Claim 1, **characterised in that** the closing body (41) is disposed on the end cap (11, 7) with a capacity to move in the direction of the longitudinal axis (19) and can be raised against the force of the closing spring (21) from a valve seat which is located on a passage (33) of the end cap (11, 7).

3. The filter device according to Claim 2, **characterised in that** the closing body (41) has a shaft (47) which projects axially from its closing surface (45) which interacts with the valve seat, through the passage (33) of the end cap (11,7), into the inner filter cavity (3), and the end cap (11, 7) has a projection (29) which projects into the filter cavity (3) and on which the shaft (47) is guided in the movement between the closed position and the open position.

4. The filter device according to Claim 3, **characterised in that** the shaft (47) extends through a bore hole (49) of the projection (29) and on its end forms a catch body (51) which, when the filter element (1) is removed from the sheathing (13, 67), locks the closing body (41) on the edge of the bore hole (49) on the projection (29) of the end cap (11, 7).

5. The filter device according to any of the preceding claims, **characterised in that** the sheathing is a hollow body of revolution from the upper end of which the filter element (1) can be removed and which is made as a fluid-permeable support pipe (13) which surrounds the outer side of the filter material (9) of the filter element (1).

6. The filter device according to Claim 5, **characterised in that** the support pipe (13) is produced from metal, in particular steel.

7. The filter device according to Claim 5 or 6, **characterised in that** the end cap (11) which is provided with the bypass valve is assigned to the lower end of the support pipe (13) and that the closing spring (21) is disposed on the lower end of the support pipe (13), and that the closing body (41) is released from the closing spring (21) which remains in the support pipe (13) when the filter element (1) is removed from the upper end of the support pipe (13).

8. The filter device according to any of Claims 4 to 7, **characterised in that** the projection (29) of the end cap (11) has a protective plate (37) which forms a dirt trap and which overlaps the region of the passage (33) and which contains the bore hole (49) for the shaft (47) of the closing body (41).

9. The filter device according to any of Claims 3 to 8, **characterised in that** a washer (53) is slipped onto the shaft (47) of the closing body (41) such that it is located on the longitudinal section of the shaft (47) which is located within the projection (29) of the end cap (11) an axial distance away from the closing surface of the closing body which interacts with the valve seat and it adjoins the inner edge of the passage (33) and closes it when the filter element (1) is removed and thus in the absence of force of the closing spring (21) and in a displacement motion of the closing body (41) which is produced by gravity.

10. The filter device according to any of the preceding claims, **characterised in that** the filter device is in the form of a reverse-flow filter with a filter element (1) through which flow can pass from the inside to the outside, the inner filter cavity (3) forming the dirty side during the filtering process.

11. The filter device according to any of Claims 1 to 9, **characterised in that** the filter device is in the form of a pressure filter with a filter element (1) through which flow can pass from the outside to the inside, the inner filter cavity (3) forming the clean side during the filtering process.

12. The filter device according to Claim 11, **characterised in that** the sheathing is formed by a filter housing (67) which defines an outer annular space (69) surrounding the filter element (11) and forming the dirty side during the filtering process, that the bypass valve is assigned to the upper end cap (7) of the filter element (1) and the closing spring (21) is attached to the removeable upper housing cover (73) of the filter housing (67) such that upon removing the filter element (1) the closing body (41) can be separated from the closing spring (21) remaining on the housing cover (73).

13. The filter device according to any of the preceding claims, **characterised in that** the closing body (41), like the remaining part of the filter element (1) which is to be disposed of after removal, is made without any metal and can be incinerated.

## Revendications

1. Dispositif de filtration comprenant
- un élément (1) filtrant, qui peut être reçu avec possibilité d'être retiré dans une enveloppe (13, 67), qui détermine un espace (3) vide intérieur du filtre et dont la matière (9) filtrante, qui peut être traversée par du fluide à épurer, sépare un espace (3, 6) formant le côté sale lors de l'opération de filtrage, d'un espace formant le côté propre et
- un robinet de dérivation, dont l'obturateur (41) peut, pour une différence de pression entre les espaces dépassant une plage de valeurs limite, venir à l'encontre d'un ressort (21) d'obturation, dans une position d'ouverture, permettant de faire disparaître la différence de pression,
- dans lequel l'obturateur (41) peut, comme partie constituante de l'élément (1) filtrant, être retiré d'un seul tenant avec celui-ci de l'enveloppe (13, 67) et être séparé ainsi dans l'espace du ressort (21) d'obturation,
- **caractérisé en ce que** l'élément (1) filtrant définissant un axe (19) longitudinal a, à une extrémité, une coiffe (11, 7) d'extrémité formant une bordure (35) pour le bord associé de la matière (9) filtrante, coiffe où le robinet de dérivation est monté, de manière à ce que, lorsque l'obturateur (41) se trouve dans la position de fermeture, l'espace (3) vide intérieur du filtre est fermé d'une manière étanche au fluide par la coiffe (11, 7) d'extrémité et, lorsque l'obturateur (41) se trouve dans la position d'ouverture, le passage de fluide est rendu possible par la coiffe (11, 7) d'extrémité.

2. Dispositif de filtration suivant la revendication 1, **caractérisé en ce que** l'obturateur (41) est monté mobile sur la coiffe (11, 7) d'extrémité dans la direction de l'axe (19) longitudinal et peut être soulevé à l'encontre de la force du ressort (21) d'obturation d'un siège de robinet se trouvant sur une traversée (33) de la coiffe (11, 7) d'extrémité.

3. Dispositif de filtration suivant la revendication 2, **caractérisé en ce que** l'obturateur (41) a une tige (47) faisant saillie axialement de sa surface (45) d'obturation, coopérant avec le siège du robinet, dans l'espace (3) vide intérieur du filtre, en passant par la traversée (33) de la coiffe (11, 7) d'extrémité, et la coiffe (11, 7) d'extrémité a un prolongement (29), qui pénètre dans l'espace (3) vide du filtre et sur lequel la tige (47) est guidée lors du déplacement entre la position de fermeture et la position d'ouverture.

4. Dispositif de filtration suivant la revendication 3, **caractérisé en ce que** la tige (47) pénètre dans un trou (49) du prolongement (29) et forme à son extrémité une pièce (51) d'encliquetage, qui, lorsque l'élément (1) filtrant est retiré de l'enveloppe (13, 67), fixe l'obturateur (41) au bord du trou (49) sur le prolongement (29) de la coiffe (11, 7) d'extrémité.

5. Dispositif de filtration suivant l'une des revendications précédentes, **caractérisé en ce que** l'enveloppe est une pièce creuse de révolution, de l'extrémité supérieure de laquelle l'élément (1) filtrant peut être retiré et qui est constituée sous la forme d'un tube (13) d'appui perméable au fluide, qui entoure le côté extérieur de la matière (9) filtrante de l'élément (1) filtrant.

6. Dispositif de filtration suivant la revendication 5, **caractérisé en ce que** le tube (13) d'appui est en métal, notamment en acier.

7. Dispositif de filtration suivant la revendication 5 ou 6, **caractérisé en ce que** la coiffe (11) d'extrémité, munie du robinet de dérivation, est associée à l'extrémité inférieure du tube (13) d'appui et **en ce que** le ressort (21) d'obturation est disposé à l'extrémité inférieure du tube (13) d'appui, de manière à ce que l'obturateur (41), lorsque l'élément (1) filtrant est retiré de l'extrémité supérieure du tube (13) d'appui, se libère du ressort (21) d'obturation restant dans le tube (13) d'appui.

8. Dispositif de filtration suivant l'une des revendications 4 à 7, **caractérisé en ce que** le prolongement (29) de la coiffe (11) d'extrémité a une plaque (37) de protection, comportant le trou (49) pour la tige (47) de l'obturateur (41), recouvrant la région du passage (33) et formant un séparateur d'impuretés.

9. Dispositif de filtration suivant l'une des revendications 3 à 8, **caractérisé en ce que**, sur la tige (47) de l'obturateur (41), est enfilé un disque (53), de manière à ce qu'il se trouve sur le tronçon de longueur, se trouvant à l'intérieur du prolongement (29) de la coiffe (11) d'extrémité, de la tige (47) à distance axiale de la surface d'obturation, coopérant avec le siège du robinet, de l'obturateur et, lorsque l'élément (1) filtrant est retiré et qu'ainsi le ressort (21) d'obturation n'a plus de force et, pour un mouvement de déplacement de l'obturateur (41) produit par la force de gravité, s'applique au bord intérieur du passage (33) et le ferme.

10. Dispositif de filtration suivant l'une des revendications précédentes, **caractérisé en ce que** le dispositif de filtration est constitué en filtre à reflux, ayant un élément (1) filtrant pouvant être traversé de l'intérieur à l'extérieur, l'espace (3) vide intérieur du filtre formant, lors de la filtration, le côté sale.

11. Dispositif de filtration suivant l'une des revendications 1 à 9, **caractérisé en ce que** le dispositif filtrant est constitué sous la forme d'un filtre à pression, ayant un élément (1) filtrant pouvant être traversé de l'extérieur à l'intérieur, l'espace (3) vide intérieur du filtre formant, à la filtration, le côté propre.

12. Dispositif de filtration suivant la revendication 11, **caractérisé en ce que** l'enveloppe est formée par un corps (67) de filtre, qui détermine un espace (69) annulaire extérieur entourant l'élément (11) filtrant et formant, à la filtration, le côté propre, **en ce que** le robinet de dérivation est associé à la coiffe (7) d'extrémité supérieure de l'élément (1) filtrant, et le ressort (21) d'obturation est monté sur le couvercle (73) supérieur, pouvant être retiré, du corps (67) de filtre, de manière à ce que, lorsque l'élément (1) filtrant est retiré, l'obturateur (41) peut être séparé du ressort (21) d'obturation restant sur le couvercle (73) du corps.

13. Dispositif de filtration suivant l'une des revendications précédentes, **caractérisé en ce que** l'obturateur (41), comme l'autre partie de l'élément (1) filtrant, dont on doit se débarrasser après le retrait, est constitué sans métal et peut être réduit en cendre.
